(19) Europäisches Patentamt
European Patent Office
Office européen des brevets

(11) **EP 3 688 525 B1**

(12) **FASCICULE DE BREVET EUROPEEN**

(45) Date de publication et mention
de la délivrance du brevet:
**28.02.2024 Bulletin 2024/09**

(21) Numéro de dépôt: **18800693.6**

(22) Date de dépôt: **20.09.2018**

(51) Classification Internationale des Brevets (IPC):
**G02F 1/157** *(2006.01)*    **B32B 17/10** *(2006.01)*

(52) Classification Coopérative des Brevets (CPC):
**G02F 1/157; B32B 17/10036; B32B 17/10513;
B32B 17/10651; B32B 17/10761**

(86) Numéro de dépôt international:
**PCT/FR2018/052295**

(87) Numéro de publication internationale:
**WO 2019/063911 (04.04.2019 Gazette 2019/14)**

(54) **PROCEDE DE MODIFICATION DE LA COULEUR EN TRANSMISSION D'UN SYSTEME OPTIQUE ET SYSTEME OPTIQUE**

VERFAHREN ZUM ÄNDERN DIE FARBE EINER OPTISCHEN VORRICHTUNG UND OPTISCHE VORRICHTUNG

METHOD OF MODIFICATION OF THE COLOR IN TRANSMISSION OF AN OPTICAL SYSTEM AND OPTICAL SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.09.2017 FR 1759138**

(43) Date de publication de la demande:
**05.08.2020 Bulletin 2020/32**

(73) Titulaire: **SAINT-GOBAIN GLASS FRANCE
92400 Courbevoie (FR)**

(72) Inventeurs:
• **CHEVALLIER, Théo
75019 Paris (FR)**
• **RAY, Hannah
Minneapolis, Minnesota 55419 (US)**

(74) Mandataire: **Saint-Gobain Recherche
B.P. 135
39, quai Lucien Lefranc
93303 Aubervilliers Cedex (FR)**

(56) Documents cités:
**US-A- 5 792 559        US-A1- 2004 229 049
US-A1- 2017 192 257**

**Description**

La présente invention se rapporte au domaine des dispositifs électrochimiques à propriétés optiques et/ou énergétiques électrocommandables, communément nommés « dispositifs électrochromes ». Plus particulièrement, l'invention se rapporte à des systèmes optiques intégrant de tels dispositifs électrochimiques ainsi qu'aux procédés de fabrication associés. Enfin, l'invention se rapporte aux procédés de modification de la couleur de tels dispositifs optiques.

Les dispositifs électrochromes présentent certaines caractéristiques pouvant être modifiées sous l'effet d'une alimentation électrique appropriée, entre un état clair et un état teinté, tout particulièrement la transmission, l'absorption, la réflexion dans certaines longueurs d'ondes du rayonnement électromagnétique, notamment dans le visible et/ou dans l'infrarouge, ou encore la diffusion lumineuse. La variation de transmission intervient généralement dans le domaine optique (infrarouge, visible, ultraviolet) et/ou dans d'autres domaines du rayonnement électromagnétique, d'où la dénomination de dispositif à propriétés optiques et/ou énergétiques variables, le domaine optique n'étant pas nécessairement le seul domaine concerné.

Sur le plan thermique, les vitrages dont on peut modifier l'absorption dans au moins une partie du spectre solaire permettent de contrôler l'apport solaire à l'intérieur des pièces ou habitacles/compartiments quand ils sont montés en vitrages extérieurs de bâtiment ou fenêtres de moyens de transport du type voiture, train, avion, et d'éviter un échauffement excessif de ceux-ci en cas de fort ensoleillement.

Sur le plan optique, ils permettent un contrôle du degré de vision, ce qui permet d'éviter l'éblouissement quand ils sont montés en vitrages extérieurs en cas de fort ensoleillement. Ils peuvent aussi avoir un effet de volet particulièrement intéressant, aussi bien en tant que vitrages extérieurs que s'ils sont utilisés en vitrages intérieurs, par exemple pour équiper des cloisons intérieures entre des pièces (bureaux dans un bâtiment), ou pour isoler des compartiments dans des trains ou des avions par exemple.

Dans ce contexte, il est connu de mettre en oeuvre un système optique intégrant un dispositif électrochrome. En dépit de leurs propriétés avantageuses, les systèmes optiques pourvus de dispositifs électrochromes ont pour inconvénient de présenter une couleur résiduelle en transmission, généralement d'une teinte jaune-verte lorsque le dispositif électrochrome est à l'état clair. Cette couleur est principalement due à l'absorption résiduelle du dispositif électrochrome, bien que d'autres composantes du système optique participent également à l'absorption de la lumière incidente.

Pour pallier cet inconvénient, il est décrit dans l'état de la technique, dont le document brevet WO2012/064510A1, un système optique équipé d'un dispositif électrochrome, dans lequel une couche d'une teinte sensiblement complémentaire de celle de l'électrochrome est ajoutée. Selon le principe de synthèse soustractive des couleurs, cette couche permet d'atténuer ou en d'autres termes, de neutraliser au moins en partie la couleur résiduelle en transmission du dispositif optique.

Au moins un problème sous-jacent demeure cependant : la couche atténuante ajoutée engendre des pertes en transmission lumineuse qui dans certaines configurations peuvent nuire significativement à la clarté en transmission du système optique, compte tenu de la quantité importante de lumière absorbée par ce dernier. Tel que décrit ci-dessus, la faculté d'une telle couche à transmettre la lumière est directement liée à son spectre d'absorption et non nécessairement à sa couleur. Ainsi, bien qu'il existe une infinité de spectre d'absorption permettant l'obtention d'une même chromaticité en transmission, les valeurs de transmission lumineuse associées à chacun de ces spectres d'absorption peuvent différer sensiblement d'un spectre à un autre.

Plus précisément, l'apparence visuelle de la couleur met en jeu trois paramètres psychosensoriels correspondant aux sensations subjectives de teinte, de saturation et de luminosité. La teinte est définie par les mots bleu, vert, rouge, etc. La saturation exprime le degré de coloration, par opposition à la quantité de radiation blanche appréciée dans le rayonnement coloré ; une couleur est d'autant moins saturée qu'elle paraît lavée de blanc. La luminosité ou clarté est un facteur achromatique qui se rapporte au niveau du stimulus coloré. Elle varie depuis une valeur maximale non éblouissante jusqu'à l'absence de lumière (le noir). On conçoit assez bien qu'en faisant varier indépendamment les uns des autres ces trois paramètres, on puisse réaliser toutes les sensations colorées imaginables. Dans ce contexte, les différents systèmes de description d'une couleur, par exemple les espaces colorimétriques de type CIE 1931 ou CIELAB 76, ne sont que des façons différentes de définir les trois paramètres qui la décrivent.

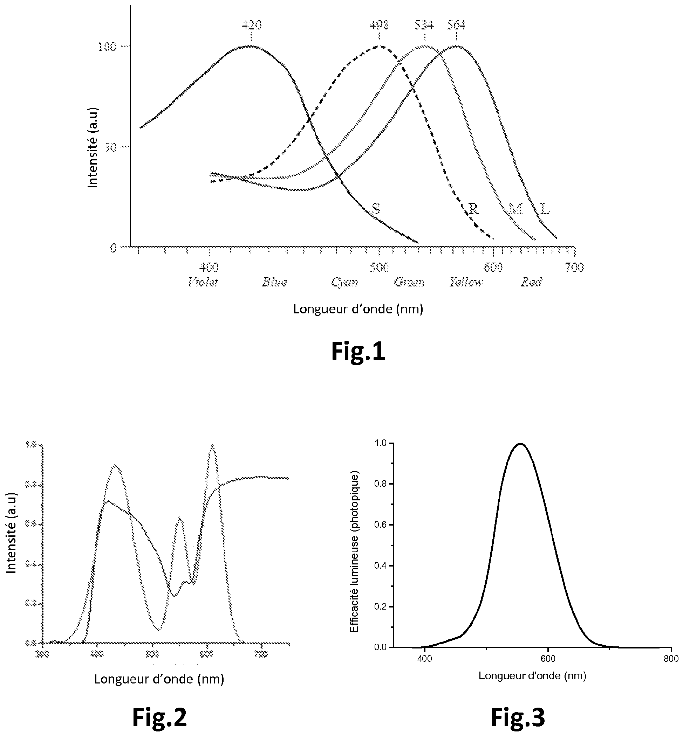

Au niveau de l'œil humain, ces sensations de couleur sont décrites par des « quantités intégrales ». A ce titre, la chromaticité perçue, notion regroupant la teinte et la saturation, est la combinaison de trois signaux correspondants à trois types de photorécepteurs colorimétriques nommés cônes, qui sont présents sur la rétine. Tel qu'illustré par la Figure 1, chaque type de cône présente une sensibilité spectrale qui lui est propre. La chromaticité d'un objet peut donc être entièrement décrite via les quantités d'excitation de chacun de ces cônes. La quantité d'excitation d'un cône est l'intégrale de l'intensité spectrale de la lumière qui l'atteint en fonction de la sensibilité spectrale du cône. Ainsi, si le cône bleu est deux fois plus sensible à 420 nm qu'à 450 nm, alors une lumière incidente de 1 mW/cm$^2$ à 420 nm crée la même excitation qu'une lumière incidente de 2 mW/cm$^2$ à 450 nm. Tant que la même excitation des cônes est créée, la même couleur est ressentie, même si la distribution spectrale de la lumière est différente. À titre d'exemple, les deux spectres représentés à la Figure 2 créent la même sensation chromatique pour un être humain, puisqu'ils provoquent la même excitation pour chaque cône. Pour une couleur donnée, on peut donc identifier une infinité de spectres pour la produire.

Les mêmes principes s'appliquent à la description de la sensation d'intensité lumineuse. Dans ce cas, des photorécepteurs nommés bâtonnets entrent également en jeu. Une sensibilité globale à l'intensité lumineuse pour un oeil humain moyen a été déterminée. Tel qu'illustré par la Figure 3, la sensibilité maximale de l'œil humain est obtenue pour un rayonnement électromagnétique de longueur d'onde 550nm, ce qui correspond à la longueur d'onde de la teinte « vert ». Dans ce contexte, la transmission lumineuse (TL) désigne la transmission moyenne pondérée par une courbe d'efficacité lumineuse décrivant la sensibilité humaine. La transmission lumineuse est donc une valeur intégrale mesurant la transmission comme ressentie par un oeil humain, pour une quantité donnée de lumière incidente. Tel que décrit dans le présent texte, la valeur de cette transmission lumineuse peut différer significativement d'un spectre d'absorption à l'autre, bien que ces spectres permettent l'obtention d'une même chromaticité en transmission.

Dans la suite du texte et à des fins descriptives, l'apparence visuelle de la couleur en transmission et les valeurs de transmission lumineuse (TL) sont mesurées selon la norme NF EN 410, communément utilisée pour la détermination des caractéristiques lumineuses et solaires des vitrages dans la construction. De manière alternative, ces données peuvent également être mesurées selon d'autres protocoles expérimentaux connus et ceci sans s'éloigner pour autant du coeur de l'invention.

Confronté à des pertes importantes en transmission lumineuse, un Homme du Métier serait incité à réduire le pourcentage de coloration de la couche atténuante, afin de maintenir la quantité de lumière absorbée par cette dernière en dessous d'un seuil acceptable. Cette solution partielle reste cependant insatisfaisante puisqu'elle tend à réduire l'atténuation chromatique du système optique, ce qui reste l'effet premièrement recherché. Les documents US 5 792 559 A et US 2017/192257 A1 divulguent une correction colorimétrique d'un système optique en transmission.

Il existe donc un besoin de fournir un système optique intégrant un dispositif électrochrome dont la couleur en transmission est modifiée de manière efficace et fiable, tout en conservant une valeur satisfaisante de transmission lumineuse.

La présente invention répond à ce besoin. Plus particulièrement, dans au moins un mode de réalisation, la technique proposée se rapporte à un procédé selon la revendication 1, de modification de la couleur en transmission d'un système optique depuis un état initial présentant une couleur initiale (L*i ; a*i ; b*i) vers un état final présentant une couleur finale (L*f ; a*f ; b*f), ledit procédé étant caractérisé en ce qu'il comprend au moins une étape de modification des propriétés d'absorbance d'un élément optique dudit système optique de sorte qu'au moins 50% de l'absorption totale de cet élément est réalisée dans une plage d'absorption effective définie de sorte qu'une variation d'absorption par le système optique d'une quantité quelconque de lumière à une longueur d'onde $\lambda$ comprise dans ladite plage d'absorption effective engendre une variation $\Delta C(\lambda)$ de distance de chromaticité ($C_i$, $C(\lambda)$) inférieure à 0, où :

$$\Delta C(\lambda) = C(\lambda) - C_i = \sqrt{(a*(\lambda) - a*ref)^2 + (b*(\lambda) - b*ref)^2} - \sqrt{(a*i - a*ref)^2 + (b*i - b*ref)^2}$$

- ($C_i$, $C(\lambda)$) est la distance de chromaticité entre une valeur considérée de chromaticité (($a*i$ ; $b*i$), ($a*(\lambda)$ ; $b*(\lambda)$)) en transmission et une valeur de référence de chromaticité en transmission (a*ref ; b*ref),
- ($a*i$ ; $b*i$) est la valeur initiale de chromaticité en transmission,
- ($a*(\lambda)$ ; $b*(\lambda)$) est la valeur de chromaticité en transmission obtenue suite à la variation d'absorption réalisée à la longueur d'onde $\lambda \in [\lambda_{min} ; \lambda_{max}]$.

Dans le présent texte, la notion de couleur regroupe les trois paramètres psychosensoriels mis en jeu dans l'établissement de son apparence visuelle, qui sont la luminosité, la teinte et la saturation, ces deux derniers paramètres pouvant être regroupés dans la notion de chromaticité. On entend par « élément optique » un élément au moins en partie transparent qui est destiné à être agencé sur le chemin optique d'un rayon incident traversant le système optique. Ce système optique peut être constitué d'une succession de plaques transparentes de matériau vitrifié ou plastique, y inclus un substrat et un contre-substrat. Selon des modes de réalisation particuliers, certaines de ces plaques sont séparées les unes des autres par un espace clos empli de gaz inerte.

L'invention repose sur un concept nouveau et inventif consistant à fournir un procédé permettant de modifier la couleur initiale en transmission d'un système optique, tout en conservant une valeur satisfaisante de transmission lumineuse ou en d'autres termes, de clarté.

Concrètement, un tel procédé d'adaptation d'un système optique à des conditions de transmission particulières peut se présenter sous la forme d'un procédé de modification d'un système optique déjà existant, par modification des propriétés d'absorbance d'un de ses éléments optiques. A noter que cette modification des propriétés d'absorbance peut être réalisée par remplacement de l'élément optique ciblé, modification de ses propriétés intrinsèques et/ou ajout d'un revêtement coloré. De manière alternative, l'objet de l'invention peut se présenter sous la forme d'un procédé de fabrication d'un système optique dans lequel les propriétés d'absorbance d'au moins un de ses éléments optiques sont d'ores et déjà modifiées, en comparaison avec un système optique connu de l'état de la technique.

Un procédé selon l'invention permet de modifier la couleur initiale d'un système optique, cette couleur initiale ayant pour composantes une clarté initiale et une chromaticité initiale, dans l'objectif d'obtenir une couleur de référence ayant notamment une valeur de référence de chromaticité. La couleur finalement obtenue après mis en oeuvre du procédé est nommée « couleur finale ».

Dans le présent texte, la distance de chromaticité C représente l'écart entre la chromaticité de la couleur de référence, également nommée « type », et la chromaticité d'une couleur considérée, dite « contre-type », par exemple la couleur initiale ou la couleur obtenue après une variation quelconque de la quantité de lumière absorbée à une longueur d'onde $\lambda$. La variation $\Delta C(\lambda)$ de cette distance de chromaticité engendrée par cette variation de la quantité de lumière absorbée par le système optique à la longueur d'onde $\lambda$ exprime la capacité du système optique à se rapprocher de la chromaticité souhaitée en transmission, c'est-à-dire la chromaticité de référence, en absorbant de la lumière à une longueur d'onde $\lambda$. Une valeur $\Delta C(\lambda)$ négative exprime une variation de chromaticité, après absorption de lumière à une longueur d'onde $\lambda \in [\lambda_{min} ; \lambda_{max}]$, permettant de rapprocher la chromaticité initiale de celle souhaitée, la chromaticité obtenue étant plus « proche » de la chromaticité souhaitée que la chromaticité initiale. Au contraire, l'obtention d'une valeur $\Delta C(\lambda)$ positive, après absorption de lumière à une longueur d'onde donnée $\lambda$ non comprise dans $[\lambda_{min} ; \lambda_{max}]$, exprime un éloignement de la chromaticité souhaitée, c'est-à-dire de la chromaticité de référence, par rapport à la chromaticité initiale.

Un procédé selon l'invention repose sur l'utilisation d'une plage d'absorption effective $[\lambda_{min} ; \lambda_{max}]$ définie à l'aide de la variation de distances de chromaticité $\Delta C(\lambda)$ du système optique engendrée par la variation de l'absorption à une longueur d'onde $\lambda$ d'une quantité quelconque de lumière. Plus précisément, cette plage d'absorption effective $[\lambda_{min} ; \lambda_{max}]$ est définie de sorte que $\Delta C(\lambda)$ est inférieure à 0, et correspond donc à une plage de longueur d'onde d'absorption pour laquelle la variation de couleur du système optique correspond à l'effet recherché, au moins d'un point de vue chromatique.

Un procédé selon l'invention repose de plus sur la notion d'absorption totale de l'élément optique considéré. Cette absorption totale est une valeur intégrale correspondant à la quantité de lumière absorbée par l'élément optique considéré sur l'ensemble de son spectre d'absorption. Le critère selon lequel « au moins 50% de l'absorption totale de l'élément optique considéré est comprise dans la plage d'absorption effective » correspond donc à une exigence de « pureté colorimétrique » selon laquelle au moins 50% de l'absorption réalisée par l'élément optique tel que modifié est dédiée à une variation chromatique tendant vers la couleur de référence. A noter que toute absorption réalisée en dehors de cette plage d'absorption effective devra nécessairement être corrigée dans l'objectif d'obtenir la chromaticité souhaitée, par exemple par l'ajout de filtres supplémentaires, ce qui le cas échéant engendrera des pertes en transmission supplémentaires que l'on souhaiterait justement éviter. La prise en considération du critère mentionné ci-dessus permet donc d'allier les notions d'efficacité de la variation chromatique d'un système optique d'une part, et de limitation des pertes en transmission lumineuse d'autre part.

Selon un mode de réalisation particulier, ledit système optique comprend au moins un système fonctionnel électrochimique à propriétés optiques et/ou énergétiques électrocommandables, qui comprend préférentiellement au moins une couche de conducteur ionique agencée entre un premier revêtement électrode et un deuxième revêtement électrode, l'au moins une couche électrochimiquement active étant adaptée pour passer de façon réversible entre un premier état et un deuxième état à propriétés de transmission optique et/ou énergétique différentes du premier état.

Selon un mode de réalisation particulier, ladite couche de conducteur ionique est ledit élément optique dudit système optique dont les propriétés d'absorbance sont modifiées.

Selon un mode de réalisation particulier, ledit système optique comprend au moins les éléments optiques suivants:

- un ensemble fonctionnel comprenant un substrat à fonction verrière sur lequel est formé ledit système fonctionnel électrochimique à propriétés optiques et/ou énergétiques électrocommandables, et
- un intercalaire de feuilletage, préférentiellement en matériau polymère, encore préférentiellement en PVB, interposé entre l'ensemble fonctionnel et un contre-substrat à fonction verrière.

A noter que l'interposition de l'intercalaire de feuilletage entre l'ensemble fonctionnel et le contre-substrat ne signifie pas nécessairement que ces trois éléments sont en contacts directs les uns avec les autres. Le terme « entre » se réfère ici à l'ordre d'agencement de ces différents éléments optiques. Ainsi, ces deniers peuvent par exemple être physiquement séparés par une ou plusieurs couches, formant par exemple le système fonctionnel électrochimique. Dans une application en tant que vitrage extérieur, le contre-substrat est destiné à être positionné vers l'extérieur d'un bâtiment, du côté d'une lumière solaire incidente.

Selon un mode de réalisation particulier, ledit procédé comprend une étape de détermination de ladite plage

d'absorption effective [$\lambda_{min}$ ; $\lambda_{max}$], préférentiellement à l'aide d'une représentation des variations chromatiques en transmission ($\Delta a*(\lambda)$ ; $\Delta b*(\lambda)$) et des variations de pertes en transmission lumineuse $\Delta TL(\lambda)$ engendrées en fonction de la longueur d'onde $\lambda$ à laquelle ledit système optique subit une variation de la quantité de lumière absorbée.

Selon un mode de réalisation particulier, ladite valeur de référence de chromaticité (a*ref ; b*ref) a une valeur de saturation nulle.

Un tel procédé vise à réduire la saturation d'une couleur ou en d'autres termes, à l'atténuer. Un point ayant une valeur de saturation nulle sera gris, blanc ou noir, selon la clarté. Dans le contexte d'une application dans un système optique à fonction verrière, une zone de saturation nulle en transmission ne présente aucune teinte, et a donc pour avantage de ne pas altérer la teinte des rayons lumineux transmis depuis l'extérieur.

Selon un mode de réalisation alternatif, la valeur ciblée de chromaticité a une saturation non nulle et correspond donc à une couleur particulière à obtenir en transmission, que cela soit sur le fondement de motivations d'ordre technique et/ou esthétique.

Selon un mode de réalisation particulier, ledit élément optique est modifié de sorte que son spectre d'absorption est sensiblement centré autour d'une longueur d'onde pour laquelle le rapport $\Delta C(\lambda)/\Delta TL(\lambda)$ est maximal, où :

- TL($\lambda$) est la transmission lumineuse dudit système optique déterminée selon la norme NF EN 410, et
- $\Delta TL(\lambda)$ est la variation de transmission lumineuse TL($\lambda$) engendrée par la variation de la quantité de lumière absorbée par le système optique à la longueur d'onde $\lambda$.

Le facteur spectral de transmission du système optique varie avec le rapport $\Delta C(\lambda)/\Delta TL(\lambda)$. Ainsi, en supposant que la variation $\Delta TL(\lambda)$ est inférieure à 0, plus la valeur de $\Delta C(\lambda)/\Delta TL(\lambda)$ est grande, et meilleure est la transmission de la lumière incidente par le système pour une longueur d'onde d'absorption $\lambda$. En d'autres termes, l'augmentation de $\Delta C(\lambda)/\Delta TL(\lambda)$ permet de réduire les pertes en transmission opérées par le système optique.

Ainsi, de manière surprenante, il a été établi que la perte globale en transmission peut être minimale pour une absorption réalisée à une longueur d'onde d'absorption se trouvant dans la plage de longueur d'onde dans laquelle l'œil est le plus sensible. Ce résultat va à l'encontre d'un préjugé technique jusqu'alors établi, selon lequel il convient d'éviter d'absorber la lumière transmise dans une région spectrale où l'œil humain est le plus sensible, afin de limiter les pertes en transmission lumineuse $\Delta TL$. Contrairement aux idées reçues, il a donc été établi par les inventeurs que dans l'optique de modifier la couleur en transmission d'un système optique tout en conservant une clarté satisfaisante, il importe de prendre davantage en compte le rapport $\Delta C(\lambda)/\Delta TL(\lambda)$, plutôt que de considérer isolément la seule variation de transmission lumineuse TL($\lambda$) du système.

Selon un mode de réalisation particulier, ledit élément optique est modifié de sorte qu'au moins 55%, préférentiellement au moins 60%, préférentiellement au moins 65%, préférentiellement au moins 70% de son absorption totale est comprise dans ladite plage d'absorption effective [$\lambda_{min}$ ; $\lambda_{max}$].

Un système optique obtenu au moyen d'un tel procédé présente un facteur spectral de transmission plus élevé, et permet donc de réduire les pertes en transmission.

Selon un mode de réalisation particulier, l'étape de modification comprend une coloration dans la masse dudit élément optique à modifier et/ou le dépôt d'un revêtement coloré sur au moins une des faces dudit élément optique à modifier.

Selon un mode de réalisation particulier, ledit procédé comprend au moins une étape préliminaire de mesure du spectre en transmission dudit système optique.

Une telle mesure de spectre est par exemple réalisée à l'aide d'un spectrophotomètre. Sur le fondement de cette mesure, il est possible de déterminer la valeur de chromaticité initiale du système optique, par exemple à l'aide d'un espace colorimétrique tel que le système XYZ de la CIE 1931.

Selon un mode de réalisation particulier, non revendiqué, l'invention concerne également un système optique dont la couleur est modifiée par un procédé tel que décrit ci-dessus.

Selon un mode de réalisation particulier, l'invention concerne aussi un système optique selon la revendication 10.

Selon un mode de réalisation particulier, ledit système optique comprend au moins un système fonctionnel électrochimique à propriétés optiques et/ou énergétiques électrocommandables, qui comprend préférentiellement au moins une couche de conducteur ionique agencée entre un premier revêtement électrode et un deuxième revêtement électrode, l'au moins une couche électrochimiquement active étant adaptée pour passer de façon réversible entre un premier état et un deuxième état à propriétés de transmission optique et/ou énergétique différentes du premier état.

Selon un mode de réalisation particulier, ledit système fonctionnel électrochimique à propriétés optiques et/ou énergétiques électrocommandables est formé sur la face du substrat opposée à l'intercalaire de feuilletage.

Selon un mode de réalisation particulier, ledit système optique comprend au moins les éléments optiques suivants:

- un ensemble fonctionnel comprenant un substrat à fonction verrière sur lequel est formé un système fonctionnel électrochimique à propriétés optiques et/ou énergétiques électrocommandables, préférentiellement un dispositif électrochrome, et
- un intercalaire de feuilletage, préférentiellement en matériau polymère, encore préférentiellement en PVB, interposé entre l'ensemble fonctionnel et un contre-substrat à fonction verrière.

Selon un mode de réalisation particulier, ledit système optique comprend un revêtement de contrôle en réflexion, préférentiellement composé de nitrure de silicium (SiNx), pour modifier, et préférentiellement atténuer, la couleur du système optique en réflexion vers un des côtés dudit système optique.

L'adaptation du système optique pour modifier sa couleur en transmission, ou celle d'un premier élément optique le composant, engendre généralement une modification de sa couleur en réflexion. La mise en oeuvre d'un revêtement de contrôle de cette couleur en réflexion permet d'en modifier les caractéristiques, et préférentiellement de l'atténuer, du point de vue d'un observateur positionné à l'opposé du système électrochrome, par rapport audit revêtement.

Selon un mode de réalisation particulier, ledit revêtement de contrôle en réflexion est agencé entre ledit ensemble fonctionnel et ledit contre-substrat.

Ainsi agencé, ledit revêtement de contrôle en réflexion permet non seulement de modifier la couleur du système optique en réflexion du point de vue d'un observateur positionné à l'extérieur, mais également d'accroître la quantité de lumière extérieure transmise par le système optique ou en d'autres termes, de réduire les pertes globales en transmission. Selon cette configuration, un effet d'interférence entre ledit élément optique adapté pour modifier la couleur en transmission dudit système optique et ledit revêtement de contrôle en réflexion, permet de diminuer la réflexion, et donc d'augmenter la transmission, en particulier aux longueurs d'ondes pour lesquelles l'œil est le plus sensible.

L'invention concerne également un procédé de fabrication d'un système optique selon la revendication 14.

L'invention concerne de plus l'utilisation, selon la revendication 15, d'un tel système optique en tant que vitrage bâtiment, notamment vitrage extérieur de cloison interne ou de porte vitrée, en tant que vitrage équipant les cloisons internes ou les fenêtres de moyens de transport du type train, avion, voiture, bateau, en tant que vitrages d'écran de visualisation du type écran d'ordinateur ou de télévision, pour des lunettes ou des objectifs d'appareils photographiques ou des protections de panneaux solaires.

D'autres caractéristiques et avantages de l'invention apparaîtront à la lecture de la description suivante de modes de réalisation particuliers, donnés à titre de simples exemples illustratifs et non limitatifs, et des figures annexées, à savoir :

- La figure 1 est un graphique illustrant la sensibilité spectrale des bâtonnets et cônes photosensibles présents dans un oeil humain,
- La figure 2 est un graphique représentant deux spectres d'absorption permettant l'obtention d'une couleur de même chromaticité en transmission,
- La figure 3 est une représentation graphique de la sensibilité de l'œil humain en fonction de la longueur d'onde d'un rayon incident,
- La figure 4 est une vue schématique en coupe d'un système optique selon un mode de réalisation particulier de l'invention,
- La figure 5 est un diagramme de flux illustrant les étapes successives d'un procédé de modification de la couleur en transmission d'un système optique selon un mode de réalisation particulier de l'invention,
- La figure 6 est un graphique illustrant dans un espace colorimétrique CIE L*a*b* la modification de la couleur en transmission d'un système optique selon un mode de réalisation particulier de l'invention,
- La figure 7 est une représentation graphique des variations chromatiques en transmission ($\Delta a^*(\lambda)$ ; $\Delta b^*(\lambda)$) et des variations de pertes en transmission lumineuse $\Delta TL(\lambda)$, en fonction de la longueur d'onde $\lambda$ à laquelle un système optique selon un mode de réalisation particulier de l'invention subit une variation de la quantité de lumière absorbée,
- La figure 8 est une représentation graphique du spectre d'absorption d'un dispositif optique modifié selon un mode de réalisation particulier de l'invention.

Sur les différentes figures, sauf indication contraire, les numéros de référence qui sont identiques représentent des éléments similaires ou identiques.

Les différents éléments illustrés par les figures ne sont pas nécessairement représentés à l'échelle réelle, l'accent étant davantage porté sur la représentation du fonctionnement général de l'invention.

Plusieurs modes de réalisation particuliers de l'invention sont présentés par la suite. Il est entendu que la présente invention n'est nullement limitée par ces modes de réalisation particuliers et que d'autres modes de réalisation peuvent parfaitement être mis en oeuvre.

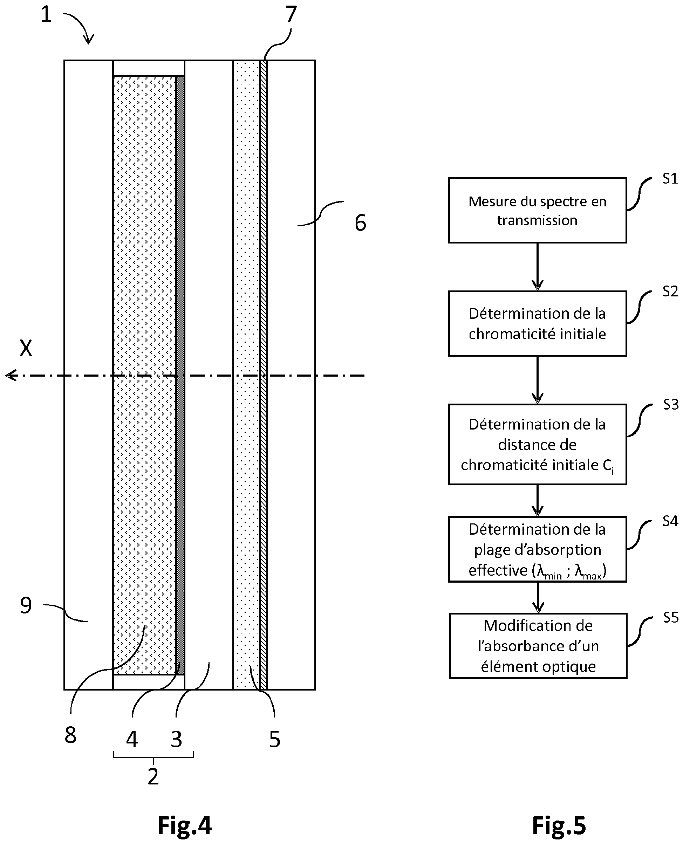

Selon un mode de réalisation particulier et tel qu'illustré par la Figure 4, l'invention se rapporte à un système optique 1 comprenant au moins les éléments optiques suivants:

- un ensemble fonctionnel 2 comprenant un substrat 3 à fonction verrière sur lequel est formé un système fonctionnel électrochimique 4 à propriétés optiques et/ou énergétiques électrocommandables, ledit système fonctionnel électrochimique 4 comprenant au moins une couche de conducteur ionique agencée entre un premier revêtement électrode et un deuxième revêtement électrode, l'au moins une couche de conducteur ionique étant adaptée pour passer de façon réversible entre un premier état et un deuxième état à propriétés de transmission optique et/ou énergétique différentes du premier état, et
- un intercalaire de feuilletage 5 en PVB, interposé entre l'ensemble fonctionnel 2 et un contre-substrat 6 à fonction verrière.

En particulier, ce système optique 1 comprend :

- un premier élément optique qui présente une couleur dite « initiale » ($L*i$ ; $a*i$ ; $b*i$) en transmission,
- un deuxième élément optique qui est adapté pour que le système optique 1 présente une couleur dite « finale » ($L*f$ ; $a*f$ ; $b*f$) en transmission, et qui est caractérisé en ce qu'au moins 50% de l'absorption totale de ce deuxième élément optique est comprise dans une plage d'absorption effective ($\lambda_{min}$ ; $\lambda_{max}$) définie de sorte qu'une variation d'absorption par le système optique 1 d'une quantité quelconque de lumière à une longueur d'onde $\lambda$ comprise dans la plage d'absorption effective [$\lambda_{min}$ ; $\lambda_{max}$] engendre une variation $\Delta C(\lambda)$ de distance de chromaticité ($C_i$, $C(\lambda)$) inférieure à 0.

Selon ce mode de réalisation particulier, le système fonctionnel électrochimique 4 à propriétés optiques et/ou énergétiques électrocommandables est formé sur la face du substrat 3 opposée à l'intercalaire de feuilletage 5. Selon un mode de réalisation alternatif, ce système fonctionnel peut être interposé entre le substrat 3 et l'intercalaire de feuilletage 5.

Selon un mode de réalisation particulier et tel qu'illustré par la Figure 4, le système optique 1 comprend un revêtement de contrôle en réflexion 7 composé de nitrure de silicium (SiNx) et agencé sur la face interne du contre-substrat 6. Ce revêtement 7 permet notamment d'atténuer la couleur en réflexion du système optique 1, du point de vue d'un observateur positionné à l'extérieur d'un bâtiment équipé d'un tel système optique 1. Un tel revêtement permet en outre d'accroître la quantité de lumière extérieure transmise par le système optique ou en d'autres termes, de réduire les pertes globales en transmission, tel que déjà décrit dans le présent texte.

Selon des modes de réalisations alternatifs, le système optique 1 peut se présenter sous différentes configurations de vitrage dans lequel les différents éléments optiques sont organisés le long de l'axe optique X :

- Simple vitrage où deux feuilles à fonction verrière, le substrat 3 et le contre-substrat 6, sont feuilletées en un seul vitrage : (extérieur d'un bâtiment) contre-substrat 6 / intercalaire de feuilletage 5 / ensemble fonctionnel 2 comprenant le substrat 3 (intérieur de bâtiment) ;
- Double vitrage, représenté par la figure 4, où deux parmi trois feuilles à fonction verrière, le substrat 3 et le contre-substrat 6, sont feuilletées en un vitrage feuilleté : (extérieur d'un bâtiment) contre-substrat 6 / intercalaire de feuilletage 5 / ensemble fonctionnel 2 comprenant le substrat 3 / lame de gaz inerte 8 / revêtement bas émissif / feuille de verre 9 (intérieur de bâtiment) ;
- Triple vitrage où deux parmi quatre feuilles de verre, le substrat 3 et le contre-substrat 6, sont feuilletées ensemble : (extérieur d'un bâtiment) contre-substrat 6 / intercalaire de feuilletage 5 / ensemble fonctionnel 2 comprenant le substrat 3 / lame de gaz inerte / feuille de verre / lame de gaz inerte / revêtement bas émissif / feuille de verre (intérieur de bâtiment) ;

D'une manière générale, le vitrage comprend un vitrage feuilleté. Ce vitrage feuilleté est destiné à être disposé du côté extérieur du bâtiment. On entend par double vitrage un ensemble de deux vitrages espacés et séparés par une lame de gaz ou de vide et par triple vitrage un ensemble de trois vitrages espacés et séparés par deux lames respectives de gaz ou de vide. Comme décrit ci-dessus, au moins l'un des vitrages espacés d'un vitrage multiple peut être feuilleté. Dans toutes les configurations, le contre-substrat 6 est destiné à être positionné vers l'extérieur.

A noter que le dispositif électrochrome inclus dans le système optique 1 selon l'invention peut inclure un ou plusieurs revêtements conducteurs transparents tels que $SnO_2$:F ou ITO et/ou un ou plusieurs réseaux conducteurs tels que des fils métalliques. La couche électrochimiquement active et la ou les couche(s) électrolyte peuvent être sous la forme d'une solution gélifiée et/ou d'un polymère conducteur ionique et/ou d'une ou plusieurs couche(s) minérale(s) déposée(s) par pulvérisation cathodique magnétron, CVD ou procédé sol-gel, et ceci sans s'éloigner du coeur de l'invention.

Un système optique 1 selon l'invention permet d'allier les notions d'efficacité de la variation chromatique d'une part, et de limitation des pertes en transmission lumineuse d'autre part. Ce système optique 1 avantageux peut notamment être obtenu par la mise en oeuvre d'un procédé de modification de sa couleur en transmission, depuis une couleur initiale (L*i ; a*i ; b*i) vers une couleur finale (L*f ; a*f ; b*f), tel que décrit plus en détail dans la suite du texte et illustré par la Figure 5.

Au cours d'une première étape (S1), le spectre en transmission du système optique 1 est mesuré à l'aide d'un spectrophotomètre ou de tout autre dispositif connu à fonction équivalente.

Sur le fondement de cette mesure, la valeur de chromaticité initiale (a*i ; b*i) en transmission du système optique est déterminée (étape S2), par exemple à l'aide d'un espace colorimétrique connu tel que le système XYZ de la CIE 1931.

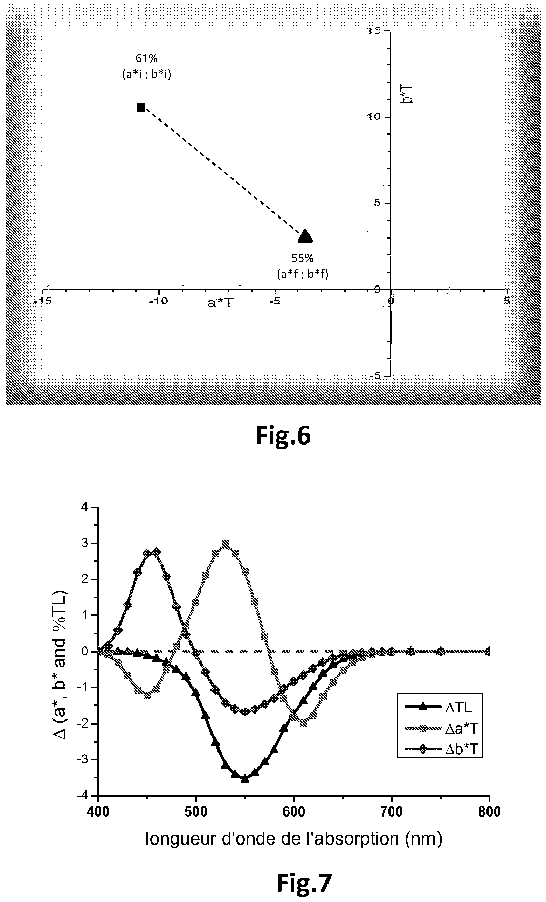

Selon un mode de réalisation particulier, et tel qu'illustré par la Figure 6, cette valeur de chromaticité initiale (a*i ; b*i) en transmission est positionnée dans l'espace colorimétrique connu CIE L*a*b*, communément appelé CIE LAB, dans lequel :

- La composante L* est la clarté, et est mesurée de 0 (noir) à 100 (blanc),
- La composante a* représente une gamme de 600 niveaux sur un axe allant de la couleur verte (-300) à la couleur rouge (+299),
- La composante b* représente une gamme de 600 niveaux sur un axe allant de la couleur bleu (-300) à la couleur jaune (+299).

Ainsi, dans l'exemple illustré par la Figure 6, la valeur mesurée à l'état clair de chromaticité initiale en transmission (a*i ; b*i) d'un dispositif optique (1) est de (-10,4805 ; 10,9183), ce qui correspond à une couleur jaune-vert. Cette valeur est représentée par un carré. A noter que selon d'autres modes de réalisation, cette valeur de chromaticité initiale en transmission (a*i ; b*i) peut varier sur l'ensemble du spectre visible, sans s'éloigner de l'esprit de l'invention.

Par la suite, la distance de chromaticité initiale $C_i$ entre cette valeur de chromaticité initiale en transmission (a*i ; b*i) et une valeur donnée de référence de chromaticité (a*ref ; b*ref) est déterminée (étape S3). Cette valeur donnée de référence se rapporte à une couleur de référence que l'on cherche à obtenir. Elle se distingue de la « couleur finale » qui est obtenue à l'issue du procédé de modification. La distance de chromaticité initiale $C_i$ correspond à la norme du vecteur allant du point de chromaticité initiale (a*i ; b*i) au point choisi de chromaticité de référence (a*ref; b*ref).

Selon le mode de réalisation particulier illustré par la Figure 6, la valeur choisie de chromaticité de référence (a*ref ; b*ref) est de saturation nulle (0 ; 0). Un tel procédé, communément appelé procédé de neutralisation, vise à atténuer une couleur afin qu'elle ne présente aucune teinte en transmission autre que celle des rayons lumineux transmis depuis l'extérieur. Au regard du repère CIE L*a*b*, une telle neutralisation implique une variation colorimétrique vers une couleur de composante a* plus élevée et de composante b* plus faible. Selon ce mode de réalisation, la distance de chromaticité initiale $C_i$ satisfait l'équation suivante :

$$C_i = \sqrt{(a*i)^2 + (b*i)^2}$$

Selon un mode de réalisation alternatif, la valeur choisie de chromaticité de référence (a*ref ; b*ref) présente une saturation non nulle et correspond donc à une couleur particulière à obtenir en transmission, que cela soit sur le fondement de motivations d'ordre technique et/ou esthétique. Selon ce mode de réalisation alternatif, la distance de chromaticité initiale $C_i$ satisfait l'équation suivante :

$$C_i = \sqrt{(a*i - a*ref)^2 + (b*i - b*ref)^2}$$

La variation $\Delta C(\lambda)$ de cette distance de chromaticité entre la valeur de chromaticité initiale (a*i ; b*i) et une valeur de chromaticité en transmission (a*($\lambda$) ; b*($\lambda$)) obtenue suite à une variation d'absorption réalisée à la longueur d'onde $\lambda$, représentée par un triangle, exprime la capacité du système optique 1 à se rapprocher de la chromaticité souhaitée en transmission, c'est-à-dire la chromaticité de référence. Ainsi, cette variation $\Delta C$ satisfait l'équation suivante :

$$\Delta C(\lambda) = C(\lambda) - C_i = \sqrt{(a*(\lambda) - a*ref)^2 + (b*(\lambda) - b*ref)^2} - \sqrt{(a*i - a*ref)^2 + (b*i - b*ref)^2}$$

Une valeur $\Delta C(\lambda)$ négative exprime une variation de chromaticité, après absorption de lumière à une longueur d'onde λ, permettant de rapprocher la chromaticité initiale de celle souhaitée, la chromaticité obtenue étant plus « proche » de la chromaticité souhaitée que la chromaticité initiale. Au contraire, l'obtention d'une valeur ΔC(λ) positive, après absorption de lumière à une longueur d'onde donnée λ, exprime un éloignement de la chromaticité souhaitée, c'est-à-dire de la chromaticité de référence, par rapport à la chromaticité initiale.

La figure 7 représente trois courbes estimatives des variations chromatiques en transmission (Δa*(λ) ; Δb*(λ)) et des variations de pertes en transmission lumineuse ΔTL(λ) liées à une absorption sensiblement monochromatique (largeur de spectre d'absorption à mi-hauteur inférieure à 5 nm) mise en oeuvre pour différentes longueurs d'onde λ sur l'ensemble du spectre optique, pour un double-vitrage électrochrome SAGE™ connu présentant les caractéristiques suivantes :

- Un contre-substrat en verre d'une épaisseur de 4 mm,
- Un intercalaire en polymère d'une épaisseur de 0,89 mm,
- Un substrat en verre de 2,2 mm d'épaisseur, revêtu d'une couche électrochrome,
- Une cavité emplie d'argon de 12,2 mm d'épaisseur,
- Un contre-verre de 4 mm d'épaisseur.

A noter que le choix d'un double-vitrage électrochrome SAGE™ et purement arbitraire. Ainsi, une représentation graphique similaire à celle de la figure 7 peut être obtenue pour tout système optique donné.

Pour revenir sur l'objet de la figure 7, les courbes estimatives des variations chromatiques Δa*(λ) et Δb*(λ) sont respectivement représentées par des carrés et des losanges. La courbe estimative des pertes en transmission lumineuse ΔTL(λ) est représentée par des triangles et correspond à la transposition de la courbe illustrée par la figure 3 sur le graphique de la figure 7.

Au regard de l'espace colorimétrique CIE L*a*b* illustré par la figure 6, une valeur de Δa* négative témoigne d'une variation chromatique vers le vert tandis qu'une valeur de Δa* positive se réfère à une variation chromatique vers le rouge. Suivant le même raisonnement, une valeur de Δb* négative témoigne d'une variation chromatique vers le bleu tandis qu'une valeur de Δa* positive se réfère à une variation chromatique vers le jaune. Suite à la transposition de ce raisonnement dans le graphique de la figure 7, on observe que la chromaticité en transmission tend :

- vers la couleur rouge dans la plage de longueur d'onde d'absorption comprise entre 480 et 575 nm (Δa* positive),
- vers la couleur verte dans les plages de longueur d'onde d'absorption comprises respectivement entre 400 et 480 nm, et entre 575 et 800 nm (Δa* négative),
- vers la couleur jaune dans la plage de longueur d'onde d'absorption comprise entre 400 et 500 nm (Δb*(λ) positive),
- vers la couleur bleue dans la plage de longueur d'onde d'absorption comprise entre 500 et 800 nm (Δb*(λ) négative).

Les variations chromatiques en transmission (Δa*(λ) ; Δb*(λ)) peuvent respectivement se définir selon les équations suivantes :

$$\Delta a*(\lambda) = a*(\lambda) - a*i$$

$$\Delta b*(\lambda) = b*(\lambda) - b*i$$

Au regard de ces deux équations, de celle déjà mentionnée définissant ΔC(λ), et des valeurs connues de a*i, a*ref, b*i et b*ref, il est aisé de calculer la variation ΔC(λ) de distance de chromaticité affectant le système optique 1.

Au cours d'une étape suivante (S4), il est déterminé à l'aide de la figure 7 une plage d'absorption effective [λ_min ; λ_max] dans laquelle une variation d'absorption par le système optique (1) d'une quantité quelconque de lumière à une longueur d'onde λ comprise dans ladite plage d'absorption effective [λ_min ; λ_max] engendre une modification de la chromaticité initiale vers la chromaticité de référence ou en d'autres termes, une variation ΔC(λ) de distance de chromaticité ($C_i$, C(λ)) inférieure à 0.

Au regard des variations chromatiques en transmission (Δa*(λ) ; Δb*(λ)) d'un dispositif optique 1 en fonction des longueurs d'onde d'absorption, telles qu'illustrées par la Figure 7, il est déterminé que la plage d'absorption effective [λ_min ; λ_max] satisfaisant ce critère s'étend approximativement entre 490 et 588 nm.

Selon un mode de réalisation particulier, la plage d'absorption effective [λ_min ; λ_max] est déterminée de sorte que la valeur du rapport ΔC(λ)/ΔTL(λ) est maximale. Le facteur spectral de transmission du système optique varie avec le rapport ΔC(λ)/ΔTL(λ). Ainsi, en supposant que la variation ΔTL(λ) est inférieure à 0, plus la valeur de ΔC(λ)/ΔTL(λ) est grande, et meilleure est la transmission de la lumière incidente par le système pour une longueur d'onde d'absorption λ. En d'autres termes, l'augmentation de ΔC(λ)/ΔTL(λ) permet de réduire les pertes en transmission opérées par le système optique.

De manière surprenante, il a été déterminé dans le cas de l'exemple illustré par la Figure 6, pour lequel la valeur mesurée de chromaticité initiale en transmission (a*i ; b*i) est de (-10,4805 ; 10,9183), que la valeur de $\Delta C(\lambda)/\Delta TL(\lambda)$ est maximale pour une longueur d'onde d'absorption de 550 nm. Or, cette valeur se trouve dans la plage de longueur d'onde dans laquelle l'œil est le plus sensible. Ce résultat va donc à l'encontre d'un préjugé technique établi, selon lequel il convient d'éviter d'absorber la lumière transmise dans une région spectrale où l'œil humain est le plus sensible, afin de limiter les pertes en transmission lumineuse $\Delta TL(\lambda)$. Contrairement aux idées reçues, il a donc été mis en évidence par les inventeurs que dans l'optique de modifier la couleur en transmission d'un système optique tout en conservant une clarté satisfaisante, il importe de prendre davantage en compte le rapport $\Delta C(\lambda)/\Delta TL(\lambda)$, plutôt que de considérer isolément la perte de transmission lumineuse $\Delta TL(\lambda)$.

Suite à la détermination de la plage d'absorption effective [$\lambda_{min}$ ; $\lambda_{max}$] (étape S4), les propriétés d'absorbance d'un élément optique dudit système optique 1 sont modifiées (étape S5), de sorte qu'au moins 50% de l'absorption totale (A) de cet élément est réalisée dans une plage d'absorption effective [$\lambda_{min}$ ; $\lambda_{max}$] définie de sorte qu'une variation d'absorption par le système optique 1 d'une quantité quelconque de lumière à une longueur d'onde $\lambda$ comprise dans ladite plage d'absorption effective [$\lambda_{min}$ ; $\lambda_{max}$] engendre une variation $\Delta C(\lambda)$ de distance de chromaticité (C$_i$, C(À)) inférieure à 0.

A noter que cette modification des propriétés d'absorbance peut être réalisée par remplacement de l'élément optique ciblé, modification de ses propriétés intrinsèques et/ou ajout d'un revêtement coloré. De manière alternative, l'objet de l'invention peut se présenter sous la forme d'un procédé de fabrication d'un système optique dans lequel les propriétés d'absorbance d'un de ses éléments optiques sont d'ores et déjà modifiées, en comparaison avec un système optique connu de l'état de la technique. Ainsi, selon ce mode de réalisation particulier, l'invention concerne un procédé de fabrication d'un système optique 1 qui comprend :

- un premier élément optique qui présente une couleur dite « initiale » (L*i ; a*i ; b*i) en transmission,
- un deuxième élément optique qui est adapté pour que le système optique 1 présente une couleur dite « finale » (L*f ; a*f ; b*f) en transmission, et qui est caractérisé en ce qu'au moins 50% de l'absorption totale de ce deuxième élément optique est comprise dans une plage d'absorption effective ($\lambda_{min}$ ; $\lambda_{max}$) définie de sorte qu'une variation d'absorption par le système optique 1 d'une quantité quelconque de lumière à une longueur d'onde $\lambda$ comprise dans la plage d'absorption effective [$\lambda_{min}$ ; $\lambda_{max}$] engendre une variation $\Delta C(\lambda)$ de distance de chromaticité (C$_i$, C(À)) inférieure à 0.

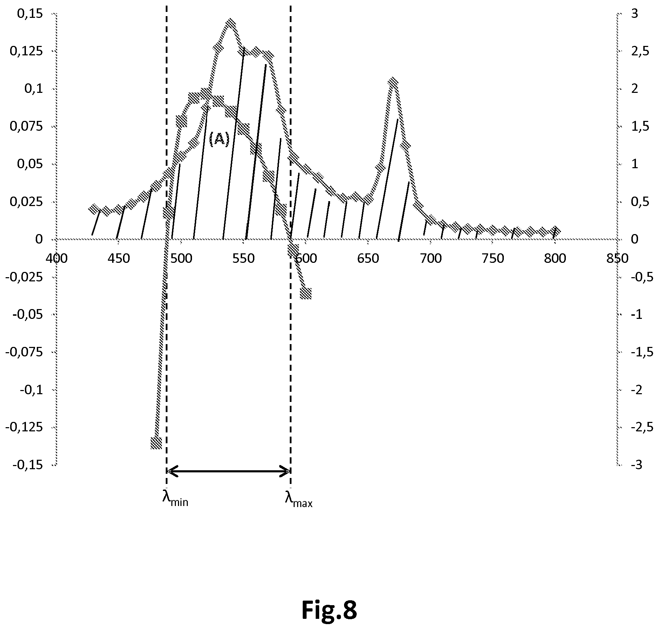

La figure 8 est une représentation graphique du spectre d'absorption (représenté par des losanges) d'un dispositif optique 1 SAGE™, déjà décrit dans le présent texte, dans lequel l'intercalaire de feuilletage 5 en PVB a été colorée dans la masse. Ce graphique illustre de plus les variations du rapport $\Delta C(\lambda)/\Delta TL(\lambda)$ (courbe de carrés) en fonction de la longueur d'onde d'absorption. De par la coloration du PVB, le spectre d'absorption du dispositif optique 1 a été modifié de sorte qu'au moins 58% de l'absorption totale (A) de cet élément optique est comprise dans la plage d'absorption effective [$\lambda_{min}$ ; $\lambda_{max}$]. Tel qu'indiqué dans le présent texte et illustré par la figure 8, cette plage d'absorption effective [$\lambda_{min}$ ; $\lambda_{max}$] s'étend approximativement entre 290 et 588 nm.

A noter que la coloration d'un PVB de sorte qu'au moins une part prédéterminée de son absorption totale (A) est comprise dans une plage prédéterminée de longueur d'onde ne présente pas de difficulté technique particulière, à condition bien sûr que ces deux paramètres soient au préalable judicieusement déterminés/choisis, ce qui constitue entre autres le coeur de l'invention.

De manière alternative ou en combinaison, la modification (S5) des propriétés d'absorbance d'un élément optique du système optique 1 est réalisée via l'ajout dans la matière de nanoparticules métalliques, semi-conductrices, et/ou le dépôt d'un revêtement coloré sur au moins une des faces de l'élément optique 1 à modifier.

A noter que selon des modes de réalisation particuliers, les propriétés d'absorbance d'un ou de plusieurs éléments du système optique 1 peuvent alternativement ou en combinaison être modifiées.

Ainsi, et selon un mode de réalisation particulier, la couche de conducteur ionique intégrée dans le dispositif électrochrome est ou fait partie des éléments optiques dont les propriétés d'absorbance sont modifiées.

De plus, le choix de la part souhaitée de l'absorption totale (A) comprise dans la plage d'absorption effective [$\lambda_{min}$ ; $\lambda_{max}$] peut différer d'un mode de réalisation à un autre sans pour autant s'éloigner de l'esprit de l'invention.

Afin de constater la reproduction de la présente invention par un système optique 1 comprenant au moins un élément optique dont les propriétés d'absorbance ont été modifiées, il est possible de procéder comme suit :

• Mesurer le spectre en transmission dudit système optique modifié,
• Comparer ce spectre à celui dudit dispositif optique avant modification, afin d'en déduire les paramètres de modification dudit élément optique, à savoir :

∘ la plage d'absorption effective [$\lambda_{min}$ ; $\lambda_{max}$] utilisée,
∘ la part choisie de l'absorption totale (A) comprise dans cette plage d'absorption effective [$\lambda_{min}$ ; $\lambda_{max}$].

A noter que le spectre en transmission dudit système optique avant modification peut être déjà connu, puisque se rapportant à un système optique standard, et/ou être déterminable par remplacement dudit élément optique modifié par un élément optique standard et mesure subséquente du spectre en transmission du système optique intégrant cet élément standard de remplacement. On entend par « élément optique standard » un élément optique ayant une influence négligeable sur le spectre obtenu en transmission du système optique.

Les valeurs décrites dans le présent texte ne doivent pas être comprises comme strictement limitées aux valeurs numériques citées. Au lieu de cela, sauf indication contraire, chaque valeur désigne à la fois la valeur exactement citée et une gamme de valeurs fonctionnellement équivalentes englobant cette valeur.

Bien que des modes de réalisation particuliers de la présente invention aient été illustrés et décrits, il est évident que divers autres changements et modifications peuvent être réalisés .

Le présent texte est donc destiné à couvrir toutes les modifications comprises dans l'étendue de protection de la présente invention, l'étendue de protection étant définie par les revendications annexées.

## Revendications

1. **Procédé de modification de la couleur en transmission d'un système optique (1),** mesurée selon la norme NF EN 410, depuis un état initial présentant une couleur initiale (L*i ; a*i ; b*i) vers un état final présentant une couleur finale (L*f ; a*f ; b*f), ledit procédé **étant caractérisé en ce qu'il comprend au moins une étape de modification (S5) des propriétés d'absorbance d'un élément optique dudit système optique (1) de sorte qu'au moins 50% de l'absorption totale (A) de cet élément, c'est**-à-dire 50% de la valeur intégrale correspondant à la quantité de lumière absorbée par **l'élément optique considéré sur l'ensemble de son spectre d'absorption,** est réalisée dans une plage **d'absorption** effective (([$\lambda_{min}$ ; $\lambda_{max}$]) définie de sorte **qu'une** augmentation **d'absorption par le système optique** (1), depuis son état initial, **d'une quantité quelconque de lumière à une longueur d'onde** $\lambda$ comprise dans ladite **plage d'absorption effective (([$\lambda_{min}$ ; $\lambda_{max}$])** engendre une variation $\Delta\text{C}(\lambda)$ **de distance de chromaticité** (C$_i$, **C**($\lambda$)) inférieure à 0, où :

$$\Delta C\left(\lambda\right) = C\left(\lambda\right) - C_i = \sqrt{\left(a*\left(\lambda\right) - a*ref\right)^2 + \left(b*\left(\lambda\right) - b*ref\right)^2} - \sqrt{\left(a*i - a*ref\right)^2 + \left(b*i - b*ref\right)^2}$$

   • (C$_i$, C($\lambda$)) est la distance de chromaticité entre une valeur considérée de chromaticité ((a*i ; b*i), (a*($\lambda$) ; b*(A))) en transmission et une valeur de référence de chromaticité en transmission (a*ref ; b*ref) représentant la chromaticité en transmission souhaitée pour le système optique (1),
   • (a*i ; b*i) est la valeur initiale de chromaticité en transmission,
   • **(a*($\lambda$) ; b*($\lambda$))** est la valeur de chromaticité en transmission obtenue suite à **l'augmentation d'absorption** réalisée à la **longueur d'onde** $\lambda \in$ **[$\lambda_{min}$ ; $\lambda_{max}$],**
   • Lesdites valeurs de chromaticité étant positionnées **dans l'espace colorimétrique** CIE L*a*b*.

2. **Procédé de modification de la couleur en transmission d'un système optique (1)** selon la revendication 1, **caractérisé en ce que** ledit système optique (1) comprend au moins un système fonctionnel électrochimique (4) à propriétés optiques et/ou énergétiques électrocommandables, qui comprend préférentiellement au moins une couche de conducteur ionique agencée entre un premier revêtement électrode et un deuxième revêtement électrode, l'au moins une couche électrochimiquement active étant adaptée pour passer de façon réversible entre un premier état et un deuxième état à propriétés de transmission optique et/ou énergétique différentes du premier état.

3. Procédé de modification **de la couleur en transmission d'un système optique (1) selon l'une quelconque des revendications 1 et 2, caractérisé en ce que ledit système** optique (1) comprend au moins les éléments optiques suivants:

   • un ensemble fonctionnel (2) comprenant un substrat (3) à fonction verrière sur lequel est formé ledit système fonctionnel électrochimique (4) à propriétés optiques et/ou énergétiques électrocommandables, et
   • un intercalaire de feuilletage (5), préférentiellement en matériau polymère, encore **préférentiellement en PVB, interposé entre l'ensemble fonctionnel (2**) et un contre-substrat (6) à fonction verrière.

4. **Procédé de modification de la couleur en transmission d'un système optique (1)** selon **l'une quelconque** des revendications 1 à 3, **caractérisé en ce qu'il comprend une** étape de détermination (S4) **de ladite plage d'absorption effective ($[\lambda_{min} ; \lambda_{max}]$), préférentiellement à l'aide d'une représentation des variations chromatiques en transmission ($\Delta a^*(\lambda)$ ; $\Delta b^*(\lambda)$)** et des variations **de pertes en transmission lumineuse $\Delta TL(\lambda)$** engendrées **en fonction de la longueur d'onde $\lambda$ à laquelle ledit système optique (1) subit** une augmentation de la quantité de lumière absorbée.

5. Procédé de modification de la couleur en transmission d'un système optique (1) **selon l'une quelconque des revendications** 1 à 4, **caractérisé en ce que** ladite valeur de référence de chromaticité (a*ref ; b*ref) a une valeur de saturation nulle.

6. **Procédé de modification de la couleur en transmission d'un** système optique (1) **selon l'une quelconque des revendications** 1 à 5, **caractérisé en ce que** ledit élément optique est modifié (S5) **de sorte que son spectre d'absorption est** sensiblement centré **autour d'une longueur d'onde pour laquelle** le rapport $\Delta C(\lambda)/\Delta TL(\lambda)$ est maximal, où :

   • **TL($\lambda$) est la transmission lumineuse dudit système optique (1) déterminée selon la** norme NF EN 410, et
   • **$\Delta$TL($\lambda$) est la variation de transmission lumineuse TL($\lambda$) engendrée par l'augmentation** de la quantité de lumière absorbée par le système optique (1) à la **longueur d'onde $\lambda$.**

7. **Procédé de modification de la couleur en transmission d'un** système optique (1) **selon l'une quelconque des revendications** 1 à 6, **caractérisé en ce que** ledit élément optique est modifié (S5) **de sorte qu'au moins 55%, préférentiellement au moins 60%,** préférentiellement au moins 65%, préférentiellement au moins 70% de son absorption totale (A) **est comprise dans ladite plage d'absorption effective** ($[\lambda_{min} ; \lambda_{max}]$),

8. **Procédé de modification de la couleur en transmission d'un** système optique (1) **selon l'une quelconque des revendications** 1 à 7, **caractérisé en ce que l'étape** de modification (S5) comprend une coloration dans la masse dudit élément optique à modifier et/ou **le dépôt d'un revêtement coloré sur au moins une des faces dudit élément optique** à modifier.

9. **Procédé de modification de la couleur en transmission d'un** système optique (1) se**lon l'une quelconque des revendications** 1 à 8, **caractérisé en ce qu'il comprend au moins** une étape préliminaire de mesure (S1) du spectre en transmission dudit système optique (1).

10. Système optique (1) comprenant :

   - un premier élément optique qui présente une couleur dite « initiale » (L*i ; a*i ; b*i) en transmission, mesurée selon la norme NF EN 410,
   - un deuxième élément optique qui est un revêtement coloré adapté pour que le système optique (1) présente une couleur dite « finale » (L*f ; a*f ; b*f) en transmission, et qui est **caractérisé en ce qu'au moins 50% de l'absorption totale (A) de** ce deuxième élément optique, **c'est**-à-dire 50% de la valeur intégrale correspondant à la quantité de lumière absorbée par **l'élément optique considéré sur l'ensemble de son spectre d'absorption, est comprise dans une plage d'absorption effective ($[\lambda_{min} ; \lambda_{max}]$) définie de sorte qu'une** augmentation **d'absorpt**ion par le premier élément optique, **d'une quantité quelconque de lumière à une longueur d'onde $\lambda$ comprise dans ladite plage d'absorption effective ($[\lambda_{min} ; \lambda_{max}]$) engendre une varia-tion $\Delta C(\lambda)$ de distance de chromaticité ($C_i$, $C(\lambda)$)** inférieure à 0, où :

$$\Delta C(\lambda) = C(\lambda) - C_i = \sqrt{(a^*(\lambda) - a^*ref)^2 + (b^*(\lambda) - b^*ref)^2} - \sqrt{(a^*i - a^*ref)^2 + (b^*i - b^*ref)^2}$$

   • ($C_i$, **C($\lambda$)) est la distance de chromaticité entre une valeur considérée de chromaticité ((a*i ; b*i), (a*($\lambda$) ; b*($\lambda$))) en transmission et une valeur de référence de** chromaticité en transmission (a*ref ; b*ref) de saturation nulle, correspondant à a*ref=b*ref=0,
   • (a*i ; b*i) est la valeur initiale de chromaticité en transmission,
   • **(a*($\lambda$) ; b*($\lambda$)) est la valeur de chromaticité en transmission obtenue suite à la** augmentation **d'absorption réalisée à la longueur d'onde $\lambda \in [\lambda_{min} ; \lambda_{max}]$,**
   • Lesdites valeurs de chromaticité étant positionnées **dans l'espace colorimétrique** connu CIE L*a*b*.

**11.** Système optique (1) selon la revendication 10, **caractérisé en ce qu'il comprend** au moins les éléments optiques suivants:

• un ensemble fonctionnel (2) comprenant un substrat (3) à fonction verrière sur lequel est formé un système fonctionnel électrochimique (4) à propriétés optiques et/ou énergétiques électrocommandables, préférentiellement un dispositif électrochrome, et
• un intercalaire de feuilletage (5), préférentiellement en matériau polymère, encore **préférentiellement en PVB, interposé entre l'ensemble fonctionnel (2) et un contre-**substrat (6) à fonction verrière.

**12.** Système optique (1) **selon l'une quelconque des revendications** 10 et 11, **caractérisé en ce qu'il comprend un revêtement de contrôle en réflexion (**7), préférentiellement composé de nitrure de silicium (SiNx), pour modifier, et préférentiellement atténuer, la couleur du système optique (1) en réflexion vers un des côtés dudit système optique.

**13.** Système optique (1) selon la revendication 12, **caractérisé en ce que** ledit revêtement de contrôle en réflexion (7) est agencé entre ledit ensemble fonctionnel (2) et ledit contre-substrat (6).

**14. Procédé de fabrication d'un** système optique (1) **selon l'une quelconque des** revendications 10 à 13.

**15.** Utilisation **d'un système optique (1) selon l'une des revendications 10 à** 13 en tant que vitrage bâtiment, notamment vitrage extérieur de cloison interne ou de porte vitrée, en tant que vitrage équipant les cloisons internes ou les fenêtres de moyens de transport du type train, avion, voiture, bateau, en tant que vitrages d'écran de visualisation du type **écran d'ordinateur ou de télévision, pour des lunettes ou des objectifs d'appareils** photographiques ou des protections de panneaux solaires.

**Patentansprüche**

**1. Verfahren zum Verändern der Farbe in Transmission eines optischen Systems (1),** gemessen gemäß der Norm NF EN 410, von einem ursprünglichen Zustand, der eine ursprüngliche Farbe (L*i; a*i; b*i) aufweist, zu einem endgültigen Zustand, der eine endgültige Farbe (L*f; a*f; b*f) aufweist, wobei das Verfahren **dadurch gekennzeichnet ist, dass es mindestens einen Schritt des Änderns (S5) von Absorbanzeigenschaften eines optischen Elements des optischen Systems (1) umfasst, sodass mindestens 50 % der Gesamtabsorption (A) dieses Elements, das** heißt 50 % des Integralwerts, der der Menge an Licht entspricht, das durch **das betrachtete optische Element auf seinem ganzen Absorptionsspektrum** absorbiert wird, in einem effektiven **Absorptionsbereich** ($[\lambda_{min}; \lambda_{max}]$) stattfindet, der so definiert ist, **dass** eine Zunahme **einer Absorption durch das optische System** (1), von seinem ursprünglichen Zustand, **einer beliebigen Menge an Licht mit einer Wellenlänge** $\lambda$, die in dem **effektiven Absorptionsbereich** ($[\lambda_{min}; \lambda_{max}]$) liegt, eine Variation $\Delta\mathbf{C}(\lambda)$ **eines Farbartabstands** ($C_i$, $\mathbf{C}(\lambda)$) kleiner als 0 erzeugt, wobei:

$$\Delta C(\lambda) = C(\lambda) - C_i = \sqrt{(a*(\lambda) - a*ref)^2 + (b*(\lambda) - b*ref)^2} - \sqrt{(a*i - a*ref)^2 + (b*i - b*ref)^2}$$

• ($C_i$, $\mathbf{C}(\lambda)$) **der Farbartabstand zwischen einem betrachteten Wert** (($a*i$; $b*i$), ($a*(\lambda)$; $b*(\lambda)$)) **der Farbart** in Transmission und einem Referenzwert ($a*ref$; $b*ref$) der Farbart in Transmission ist, der die gewünschte Farbart in Transmission für das optische System (1) darstellt,
• ($a*i$; $b*i$) der ursprüngliche Wert der Farbart in Transmission ist,
• ($a*(A)$; $b*(\lambda)$) der Wert der Farbart in Transmission ist, der im Anschluss an **die Zunahme der Absorption** erhalten wird, die bei der **Wellenlänge** $\lambda \in [\lambda_{min}; \lambda_{max}]$ stattfindet,
• wobei die Werte der Farbart **in dem Farbraum** CIE L*a*b positioniert sind.

**2. Verfahren zum Verändern der Farbe in Transmission eines optischen Systems (1)** nach Anspruch 1, **dadurch gekennzeichnet, dass** das optische System (1) mindestens ein elektrochemisches funktionales System (4) mit elektrisch steuerbaren optischen und/oder energetischen Eigenschaften umfasst, das vorzugsweise mindestens eine ionenleitenden Schicht umfasst, die zwischen einer ersten Elektrodenbeschichtung und einer zweiten Elektrodenbeschichtung angeordnet ist, wobei die mindestens eine aktive elektrochemische Schicht zum Übergehen auf reversible Weise zwischen einem ersten Zustand und einem zweiten Zustand mit Eigenschaften der optischen oder energetischen Transmission angepasst ist, die sich von dem ersten Zustand unterscheiden.

3. Verfahren zum Verändern **der Farbe in Transmission eines optischen Systems (1) nach einem der Ansprüche 1 und 2,**
**dadurch gekennzeichnet, dass das** optische **System** (1) mindestens die folgenden optischen Elemente umfasst:

• eine funktionale Baugruppe (2), umfassend ein Substrat (3) mit Glasfunktion, auf dem das elektrochemische funktionale System (4) mit elektrisch steuerbaren optischen und/oder energetischen Eigenschaften ausgebildet ist, und
• eine Verbundzwischenlage (5), vorzugsweise aus Polymermaterial, mehr **bevorzugt aus PVB, die zwischen der funktionalen Baugruppe** (2) und einem Gegensubstrat (6) mit Glasfunktion eingefügt ist.

4. **Verfahren zum Verändern der Farbe in Transmission eines optischen Systems (1)** nach **einem** der Ansprüche 1 bis 3, **dadurch gekennzeichnet, dass es einen** Schritt eines Bestimmens (S4) **des effektiven Absorptionsbereichs** ($[\lambda_{min}; \lambda_{max}]$), **vorzugsweise mithilfe einer Darstellung von farblichen Variationen ($\Delta a^*(\lambda); Ab^*(\lambda)$) in Transmission** und von Variationen $\Delta TL(\lambda)$von **Verminderungen in Lichttransmission** umfasst, die **in Abhängigkeit von der Wellenlänge** $\lambda$ erzeugt werden, **bei der das optische System (1)** eine Zunahme der Mengen an absorbiertem Licht erfährt.

5. Verfahren zum Verändern der Farbe in **Transmission eines** optischen Systems (1) **nach einem der Ansprüche 1 bis 4,**
**dadurch gekennzeichnet, dass** der Referenzwert (a*ref; b*ref) der Farbart einen Sättigungswert von null besitzt.

6. **Verfahren zum Verändern der Farbe in Transmission eines** optischen Systems (1) **nach einem der Ansprüche 1 bis 5,**
**dadurch gekennzeichnet, dass** das optische Element verändert wird (S5), **sodass sein Absorptionsspektrum** im Wesentlichen **um eine Wellenlänge herum** zentriert ist, **für die** das Verhältnis $\Delta C(\lambda)/\Delta TL(\lambda)$ maximal ist, wobei:

• TL($\lambda$) **die Lichttransmission des optischen Systems (1) ist, die gemäß der** Norm NF EN 410 **bestimmt wird**, und
• $\Delta TL(\lambda)$ **die Variation der Lichttransmission TL(A) ist, die durch die Zunahme** der Menge an Licht **erzeugt wird**, das durch das optische System (1) bei der **Wellenlänge** $\lambda$ absorbiert wird.

7. **Verfahren zum Verändern der Farbe in Transmission eines** optischen Systems (1) **nach einem der Ansprüche 1 bis 6,**
**dadurch gekennzeichnet, dass** das optische Element verändert wird (S5), **sodass mindestens 55 %, vorzugsweise mindestens 60 %,** vorzugsweise mindestens 65 %, vorzugsweise mindestens 70 % seiner Gesamtabsorption (A) **in dem effektiven Absorptionsbereich** ($[\lambda_{min}; \lambda_{max}]$) liegt.

8. **Verfahren zum Verändern der Farbe in Transmission eines** optischen Systems (1) **nach einem der Ansprüche 1 bis 7,**
**dadurch gekennzeichnet, dass der Schritt** des Veränderns (S5) eine Färbung in der Masse des zu verändernden optischen Elements und/oder **die Abscheidung einer gefärbten Beschichtung auf mindestens eine der Flächen des** zu verändernden **optischen Elements** umfasst.

9. **Verfahren zum Verändern der Farbe in Transmission eines** optischen Systems (1) **nach einem der Ansprüche 1 bis 8,**
**dadurch gekennzeichnet, dass es mindestens** einen Vorbereitungsschritt (S1) zum Messen des Spektrums in Transmission des optischen Systems (1) **umfasst.**

10. Optisches System (1), umfassend:

- ein erstes optisches Element, das eine sogenannte "ursprüngliche" Farbe (L*i; a*i; b*i) in Transmission aufweist, gemessen gemäß der Norm NF EN 410,
- ein zweites optisches Element, das eine gefärbte Beschichtung ist, die angepasst ist, damit das optische System (1) eine sogenannte "endgültige" Farbe (L*f; a*f; b*f) in Transmission aufweist, und das **dadurch gekennzeichnet ist, dass mindestens 50 % der Gesamtabsorption (A)** dieses zweiten optischen Elements, **das** heißt 50 % des Integralwerts, der der Menge an Licht entspricht, das durch das **betrachtete optische Element auf seinem gesamten Absorptionsspektrum** absorbiert wird, **in einem effektiven Absorptionsbereich ($[\lambda_{min}; \lambda_{max}]$) liegt,** der definiert ist, **sodass eine** Zunahme **der Absorption** durch das erste optische Element, **einer beliebigen Menge an Licht mit einer Wellenlänge** $\lambda$**, die in dem effektiven Absorptions-bereich (**$[\lambda_{min}; \lambda_{max}]$**) liegt, eine Variation** $\Delta C(\lambda)$ **des Farbartabstands(Ci, C(**$\lambda$**))** kleiner als 0 erzeugt, wobei:

$$\Delta C(\lambda) = C(\lambda) - C_i = \sqrt{(a*(\lambda) - a*ref)^2 + (b*(\lambda) - b*ref)^2} - \sqrt{(a*i - a*ref)^2 + (b*i - b*ref)^2}$$

- (C$_i$, **C(**$\lambda$**))** der Farbartabstand zwischen einem betrachteten Wert ((a*i; b*i), (a*(λ);b*(λ))) der Farbart in Transmission und einem Referenzwert (a*ref; b*ref) der Farbart in Transmission mit Sättigung von null ist, der a*ref=b*ref=0 entspricht,
- (a*i; b*i) der ursprüngliche Wert der Farbart in Transmission ist,
- **(a*(**$\lambda$**); b*(**$\lambda$**)) der Wert der Farbart in Transmission ist, der im Anschluss an die** Zunahme **der Absorption erhalten wird, die bei der Wellenlänge** $\lambda \in [\lambda_{min}; \lambda_{max}]$ **stattfindet,**
- wobei die Werte der Farbart **in dem** bekannten **Farbraum** CIE L*a*b positioniert sind.

11. Optisches System (1) nach Anspruch 10, **dadurch gekennzeichnet, dass es** mindestens die folgenden optischen Elemente **umfasst**:

- eine funktionale Baugruppe (2), umfassend ein Substrat (3) mit Glasfunktion, auf dem ein elektrochemisches funktionales System (4) mit elektrisch steuerbaren optischen und/oder energetischen Eigenschaften ausgebildet ist, vorzugsweise eine elektrochrome Vorrichtung, und
- eine Verbundzwischenlage (5), vorzugsweise aus Polymermaterial, mehr **bevorzugt aus PVB, die zwischen der funktionalen Baugruppe (2) und einem** Gegensubstrat (6) mit Glasfunktion eingefügt ist.

12. Optisches System (1) **nach einem der Ansprüche** 10 und 11,
**dadurch gekennzeichnet, dass es eine Reflexionssteuerungsbeschichtung** (7) **umfasst**, die vorzugsweise aus Siliziumnitrid (SiNx) besteht, zum Verändern, und vorzugsweise Abschwächen, der Farbe des optischen Systems (1) in Reflexion zu einer der Seiten des optischen Systems.

13. Optisches System (1) nach Anspruch 12, **dadurch gekennzeichnet, dass** die Reflexionssteuerungsbeschichtung (7) zwischen der funktionalen Baugruppe (2) und dem Gegensubstrat (6) eingerichtet ist.

14. **Verfahren zum Herstellen eines** optischen Systems(1) **nach einem der** Ansprüche 10 bis 13.

15. Verwendung **eines optischen Systems (1) nach einem der Ansprüche 10 bis** 13 als eine Gebäudeverglasung, insbesondere eine Außenverglasung einer Innentrennwand oder einer verglasten Tür, als eine Verglasung, die Innentrennwände oder Fenster von Transportmitteln der Art Zug, Flugzeug, Auto, Schiff ausrüstet, als Verglasungen eines Anzeigebildschirms der Art **Rechner- oder Fernsehbildschirm, für Brillen oder Objektive von Fotoapparaten** oder Schutzeinrichtungen von Solarmodulen.

## Claims

1. A process for modifying the color in transmission of an optical system (1) measured according to standard NF EN 410, from an initial state having an initial color (L*I; a*i; b*i) to a final state having a final color (L*f; a*f; b*f), said process being **characterized in that** it comprises at least one step (S5) of modifying the absorbance properties of an optical element of said optical system (1) so that at least 50% of the total absorption (A) of this element, i.e. 50% of the integral value corresponding to the quantity of light absorbed by the optical element considered on the whole of its absorption spectrum, occurs in an effective absorption range ($[\lambda_{min}; \lambda_{max}]$) defined so that a raise in absorption by the optical system (1), from its initial state, of any amount of light at a wavelength $\lambda$ comprised in said effective absorption range ($[\lambda_{min}; \lambda_{max}]$) generates a variation $\Delta C(\lambda)$ in chromaticity distance ($C_i$, $C(\lambda)$) smaller than 0, where:

$$\Delta C(\lambda) = C(\lambda) - C_i = \sqrt{(a*(\lambda) - a*ref)^2 + (b*(\lambda) - b*ref)^2} - \sqrt{(a*i - a*ref)^2 + (b*i - b*ref)^2}$$

- ($C_i$, $C(\lambda)$) is the chromaticity distance between a given value ((a*i; b*i), (a*(λ); b*(λ))) of chromaticity in transmission and a reference value (a*ref; b*ref) of chromaticity in transmission, representing the desired chromaticity in transmission for the optical system (1),
• (a*i; b*i) is the initial value of chromaticity in transmission,
• (a*($\lambda$); b*($\lambda$)) is the value of chromaticity in transmission obtained following the variation in absorption achieved at the wavelength $\lambda \in [\lambda_{min}; \lambda_{max}]$,
• said chromaticity values being placed in the colorimetric space CIE L*a*b*.

2. The process for modifying the color in transmission of an optical system (1) as claimed in claim 1, **characterized in that** said optical system (1) comprises at least one electrochemical functional system (4) with electrically controllable optical and/or energy properties, which preferably comprises at least one ionically conductive layer arranged between a first electrode coating and a second electrode coating, the at least one electrochemically active layer being suitable for passing reversibly between a first state and a second state having optical and/or energy transmission properties different from the first state.

3. The process for modifying the color in transmission of an optical system (1) as claimed in either one of claims 1 and 2, **characterized in that** said optical system (1) comprises at least the following optical elements:

• a functional assembly (2) comprising a substrate (3) of glazing function, on which substrate said electrochemical functional system (4) with electrically controllable optical and/or energy properties is formed, and
• a lamination interlayer (5), which is preferably made of polymer and more preferably of PVB, and which is interposed between the functional assembly (2) and a counter-substrate (6) of glazing function.

4. The process for modifying the color in transmission of an optical system (1) as claimed in any one of claims 1 to 3, **characterized in that** it comprises a step (S4) of determining said effective absorption range ($[\lambda_{min}; \lambda_{max}]$), preferably using a representation of the chromatic variations ($\Delta$a*($\lambda$); $\Delta$b*($\lambda$)) in transmission and of the variations $\Delta$TL($\lambda$) in losses in light transmission generated as a function of the wavelength $\lambda$ at which said optical system (1) undergoes a raise in the amount of light absorbed.

5. The process for modifying the color in transmission of an optical system (1) as claimed in any one of claims 1 to 4, **characterized in that** said reference chromaticity value (a*ref; b*ref) has a saturation value of zero.

6. The process for modifying the color in transmission of an optical system (1) as claimed in any one of claims 1 to 5, **characterized in that** said optical element is modified (S5) so that its absorption spectrum is substantially centered on a wavelength at which the ratio $\Delta$C($\lambda$)/$\Delta$TL($\lambda$) is maximal, where:

• TL($\lambda$) is the light transmission of said optical system (1), as determined according to standard NF EN 410, and
• $\Delta$TL($\lambda$) is the variation in light transmission TL($\lambda$) generated by the raise in the amount of light absorbed by the optical system (1) at the wavelength $\lambda$.

7. The process for modifying the color in transmission of an optical system (1) as claimed in any one of claims 1 to 6, **characterized in that** said optical element is modified (S5) so that at least 55%, preferably at least 60%, preferably at least 65%, and preferably at least 70% of its total absorption (A) is comprised in said effective absorption range ($[\lambda_{min}; \lambda_{max}]$).

8. The process for modifying the color in transmission of an optical system (1) as claimed in any one of claims 1 to 7, **characterized in that** the modifying step (S5) comprises coloring the bulk of said optical element to be modified and/or depositing a colored coating on at least one of the faces of said optical element to be modified.

9. The process for modifying the color in transmission of an optical system (1) as claimed in any one of claims 1 to 8, **characterized in that** it comprises at least one preliminary step (S1) of measuring the spectrum in transmission of said optical system (1).

10. An optical system (1) comprising:

- a first optical element that has what is called an "initial" color (L*i; a*i; b*i) in transmission,
- a second optical element that is a colored coating such that the optical system (1) has what is called a "final" color (L*f; a*f; b*f) in transmission, and that is **characterized in that** at least 50% of the total absorption (A) of this second optical element, i.e. 50% of the integral value corresponding to the quantity of light absorbed by the optical element considered on the whole of its absorption spectrum, is comprised in an effective absorption

range ($[\lambda_{min}; \lambda_{max}]$) defined so that a raise in absorption by the first optical element of any amount of light at a wavelength $\lambda$ comprised in said effective absorption range ($[\lambda_{min}; \lambda_{max}]$) generates a variation $\Delta C(\lambda)$ in chromaticity distance ($C_i$, $C(\lambda)$) smaller than 0, where:

$$\Delta C(\lambda) = C(\lambda) - C_i = \sqrt{(a^*(\lambda) - a^*ref)^2 + (b^*(\lambda) - b^*ref)^2} - \sqrt{(a^*i - a^*ref)^2 + (b^*i - b^*ref)^2}$$

- ($C_i$, $C(\lambda)$) is the chromaticity distance between a given value (($a^*i$; $b^*i$), ($a^*(\lambda)$; $b^*(\lambda)$)) of chromaticity in transmission and a reference value ($a^*ref$; $b^*ref$) of chromaticity in transmission having a saturation value of zero; corresponding to $a^*ref = b^*ref = 0$,
- ($a^*i$; $b^*i$) is the initial value of chromaticity in transmission,
- ($a^*(\lambda)$; $b^*(\lambda)$) is the value of chromaticity in transmission obtained following the variation in absorption achieved at the wavelength $\lambda \in [\lambda_{min}; \lambda_{max}]$,
- said chromaticity values being placed in the colorimetric space CIE L*a*b*.

11. The optical system (1) as claimed in claim 10, **characterized in that** it comprises at least the following optical elements:

   - a functional assembly (2) comprising a substrate (3) of glazing function, on which substrate an electrochemical functional system (4) with electrically controllable optical and/or energy properties, preferably an electrochromic device, is formed, and
   - a lamination interlayer (5), which is preferably made of polymer and more preferably of PVB, and which is interposed between the functional assembly (2) and a counter-substrate (6) of glazing function.

12. The optical system (1) as claimed in any one of claims 10 to 11, **characterized in that** it comprises a reflection-controlling coating (7), which is preferably made of silicon nitride (SiNx), in order to modify, and preferably attenuate, the color of the optical system (1) in reflection toward one of the sides of said optical system.

13. The optical system (1) as claimed in claim 12, **characterized in that** said reflection-controlling coating (7) is arranged between said functional assembly (2) and said counter substrate (6).

14. A process for manufacturing an optical system (1) as claimed in any one of claims 10 to 13.

15. The use of an optical system (1) as claimed in one of claims 10 to 13 as an architectural glazing, in particular an exterior glazing of an internal partition or glazed door, as a glazing in the windows or the internal partitions of transportation means such as trains, airplanes, automobiles, boats and ships, as glazings for display screens such as computer screens or television screens, for spectacles or the objectives of cameras or to protect solar panels.

**Fig.1**

**Fig.2**

**Fig.3**

1

7

X

6

9

8 4 3 5

2

**Fig.4**

S1
Mesure du spectre en transmission

S2
Détermination de la chromaticité initiale

S3
Détermination de la distance de chromaticité initiale $C_i$

S4
Détermination de la plage d'absorption effective ($\lambda_{min}$ ; $\lambda_{max}$)

S5
Modification de l'absorbance d'un élément optique

**Fig.5**

**Fig.6**

longueur d'onde de l'absorption (nm)

**Fig.7**

**Fig.8**

## RÉFÉRENCES CITÉES DANS LA DESCRIPTION

**Documents brevets cités dans la description**

- WO 2012064510 A1
- US 5792559 A
- US 2017192257 A1